# EUROPÄISCHE PATENTSCHRIFT

(11) **EP 2 720 345 B1**
(45) Veröffentlichungstag und Bekanntmachung des Hinweises auf die Patenterteilung: **10.02.2016**
(21) Anmeldenummer: 12188056.1
(22) Anmeldetag: 10.10.2012
(51) Int. Cl.: H02J 7/00

(54) **Energieversorgung**
Energy supply
Alimentation en énergie

(43) Veröffentlichungstag der Anmeldung: 16.04.2014
(73) Patentinhaber: VEGA Grieshaber KG, 77709 Wolfach (DE)
(72) Erfinder: Allgaier, Volker, 77716 Haslach i.K. (DE); Isenmann, Andreas, 77716 Haslach i.K. (DE)
(74) Vertreter: Westphal, Mussgnug & Partner Patentanwälte mbB

(56) Entgegenhaltungen:
- WO-A2-03/041189
- US-A- 5 898 234

## Beschreibung

Die vorliegende Erfindung betrifft eine Energieversorgung für ein mit einer Nennspannung betreibbares Feldgerät.

Aus dem Stand der Technik, beispielweise aus der internationalen Anmeldung WO 03/041189 A2, sind Energieversorgungen für Feldgeräte bekannt, wobei eine erste Energieversorgung und ein Energiespeicher vorgesehen sind. Die erste Energieversorgung speist über eine Ladeschaltung den Energiespeicher und lädt diesen dadurch auf. Das Feldgerät wird dann ausschließlich aus dem Energiespeicher versorgt. Es sind auch weitere Energieversorgungen, die eine erste Energieversorgung mit veränderlicher Ausgangsspannung aufweisen, bekannt.

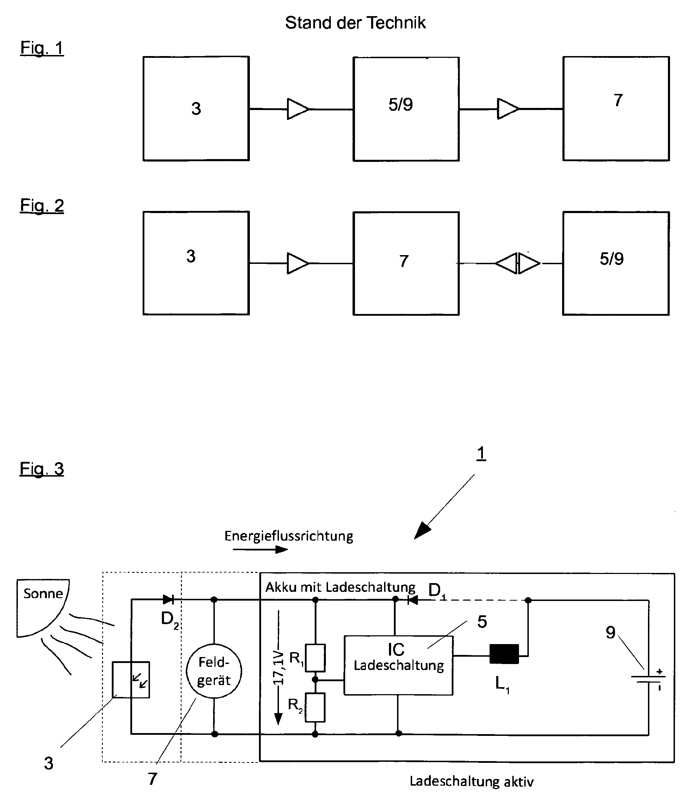

In Figur 1 ist ein Blockschaltbild einer aus dem Stand der Technik bekannten Energieversorgung gezeigt, bei der einer ersten Energieversorgung 3 ein Energiespeicher mit Ladeschaltung 5 nachgeschaltet ist. Der Energiespeicher mit Ladeschaltung 5 ist im vorliegenden Ausführungsbeispiel als Akkumulator 9 mit einer als integrierte Schaltung ausgeführten Ladeschaltung aufgebaut. Als erste Energieversorgung 3 kann beispielsweise eine Solarzelle zum Einsatz kommen, die dann über die Ladeschaltung den Akkumulator 9 lädt. Dem Akkumulator 9 mit der Ladeschaltung ist ein Feldgerät 7 nachgeschaltet, das ausschließlich aus dem Akkumulator 9 mit Energie versorgt wird.

An den aus dem Stand der Technik bekannten Energieversorgungen wird es als nachteilig empfunden, dass durch den technisch begrenzten Wirkungsgrad der Ladeschaltung sowie der Energiespeicherung in dem Akkumulator 9 sowohl beim Laden des Akkumulators 9 als auch beim Versorgen des Feldgerätes 7 mit Energie wirkungsgradbedingt Energie verloren geht. Darüber hinaus wird es als nachteilig angesehen, dass eine Energieversorgung ausschließlich über den Akkumulator 9 stattfinden kann, da beispielsweise bauraumbedingt Situationen entstehen können, bei denen die aus dem Stand der Technik bekannte Verschaltung nicht möglich oder wenigstens nachteilig ist.

Es ist die Aufgabe der vorliegenden Erfindung, eine Energieversorgung anzugeben, die die aus dem Stand der Technik bekannten Nachteile behebt und eine flexiblere sowie energieeffizientere Energieversorgung gewährleistet.

Diese Aufgabe wird durch eine Energieversorgung mit den Merkmalen des Patentanspruchs 1 gelöst.

Eine erfindungsgemäße Energieversorgung für ein mit einer Nennspannung betreibbares Feldgerät weist eine erste Energieversorgung für das Feldgerät und einen Energiespeicher auf, der über eine Ladeschaltung von der ersten Energieversorgung aufladbar ist. Erfindungsgemäß weist die erste Energieversorgung eine veränderliche Ausgangsspannung auf und die Ladeschaltung zwischen der ersten Energieversorgung und dem Energiespeicher angeordnet ist. Dazu ist die Ladeschaltung in einem ersten Zustand, in dem die Ausgangsspannung über einem vorbestimmten Wert liegt, so geschaltet, dass das Feldgerät über die erste Energieversorgung betreibbar ist und der Energiespeicher mit überschüssiger Energie geladen wird. In einem zweiten Zustand, in dem die Ausgangsspannung unter dem vorbestimmten Wert liegt, ist die Ladeschaltung so geschaltet, dass das Feldgerät über die erste Energieversorgung und den Energiespeicher versorgbar ist.

Durch eine erfindungsgemäße Energieversorgung wird gewährleistet, dass das Feldgerät zwischen die erste Spannungsversorgung und den Energiespeicher geschaltet werden kann und damit bauraumbedingte Restriktionen, bei denen ein Einsatz der aus dem Stand der Technik bekannten Energieversorgungen nicht möglich ist, umgangen werden. Dadurch, dass das Feldgerät zwischen der Spannungsversorgung und dem Energiespeicher mit der Ladeschaltung angeordnet ist, ist es außerdem möglich, dass zu jedem Zeitpunkt zu dem an der ersten Energieversorgung eine Ausgangsspannung abgreifbar ist, das Feldgerät direkt über diese betrieben wird und gegebenenfalls die verbleibende Spannungsdifferenz zur Nennspannung des Feldgerätes über den Energiespeicher bereitgestellt wird. Auf diese Weise ist es möglich, annähernd in jedem Zustand ohne die wirkungsgradbedingten Verluste der Ladeschaltung sowie der Energiespeicherung die von der ersten Energieversorgung zur Verfügung gestellte Energie direkt zu nutzen und damit eine energiesparendere Energieversorgung zur Verfügung zu stellen.

Die erfindungsgemäße Energieversorgung ist besonders günstig einsetzbar, wenn die erste Energieversorgung als Solarmodul ausgebildet ist. Es sind aber auch andere Energieversorgungen, wie beispielsweise Kleinstwindkraftanlagen, als erste Energieversorgung denkbar.

Insbesondere bei ersten Energieversorgungen, die umweltbedingt Schwankungen unterworfen sind, ist die vorgeschlagene Schaltung sinnvoll, da einerseits die regenerativ gewonnene Energie beispielsweise aus dem Solarmodul oder einer Kleinstwindkraftanlage direkt benutzt und ansonsten gespeichert werden kann. Für den Fall, dass beispielsweise das Solarmodul witterungsoder tageszeitbedingt keine Energie liefert, ist ein Betrieb des Feldgerätes durch den Energiespeicher weiterhin sichergestellt.

In den Fällen, in denen die erste Energieversorgung mehr Energie zur Verfügung stellt, als für den Betrieb des Feldgerätes notwendig ist, besteht gleichzeitig die Möglichkeit, neben dem Betrieb des Feldgerätes auch den Energiespeicher zu laden.

Die vorgeschlagene Schaltung ist besonders günstig dann einsetzbar, wenn der vorbestimmte Wert für die Ausgangsspannung der Nennspannung dem des Feldgerätes entspricht.

Eine besonders flexible, kostengünstige und platzsparende Ausgestaltung wird erreicht, wenn die Ladeschaltung als integrierte Schaltung ausgebildet ist. Zum Einsatz können beispielsweise FPGAs (Field Programmable Gate Arrays), mit entsprechenden Algorithmen programmierte Mikrocontroller oder speziell designte integrierte Schaltungen kommen. Es besteht auch die Möglichkeit, auf dem Markt erhältliche integrierte Ladeschaltungen durch eine äußere Beschaltung an die erfindungsgemäße Energieversorgung anzupassen.

Zur Umschaltung der Ladeschaltung von dem ersten Zustand in den zweiten Zustand und umgekehrt, ist es vorteilhaft, wenn ein Komparator vorgesehen ist, der eine Referenzspannung mit einer zur Ausgangsspannung proportionalen Spannung vergleicht. Die Referenzspannung kann dabei beispielweise durch den Energiespeicher bereitgestellt werden. Die Ladeschaltung kann dieses Signal ebenfalls zur Steuerung des Arbeitspunktes einer Solarzelle nutzen.

Damit der Energiespeicher keine der Nennspannung des Feldgerätes entsprechende Referenzspannung zur Verfügung stellen muss, kann es sinnvoll sein, einen Spannungsteiler zur Erzeugung der zur Ausgangsspannung proportionalen Spannung vorzusehen. Auf diese Weise ist es möglich, den Komparator mit einer wesentlich geringeren Referenzspannung zu betreiben und dennoch den Umschaltzeitpunkt anhand der Nennspannung des Feldgerätes festzulegen.

Um einen Energiefluss aus dem Energiespeicher zu dem Feldgerät zu ermöglichen und gleichzeitig einen Energiefluss in den Energiespeicher unter Umgehung der Ladeschaltung auszuschließen, ist es sinnvoll, wenn parallel zu der Ladeschaltung eine Diode oder andere geeignete Bauteile (z.B. MOSFET) vorgesehen sind, die derart angeordnet ist, dass sie in dem ersten Zustand sperrt und in dem zweiten Zustand den Energiespeicher leitend mit dem Feldgerät verbindet.

Die Diode ist damit mit ihrer Anode mit dem Pluspol des Energiespeichers und mit ihrer Kathode mit dem Feldgerät verbunden. Bei einer Energieversorgung des Feldgerätes aus dem Energiespeicher ist die Diode in Flussrichtung geschaltet und ermöglicht damit den Energiefluss vom Energiespeicher zum Feldgerät.

Um außerdem einen Energiefluss in Richtung der ersten Energieversorgung zu verhindern, ist es sinnvoll, wenn zwischen der ersten Energieversorgung und dem Feldgerät eine zweite Diode vorgesehen ist, die derart angeordnet ist, dass sie in dem ersten Zustand das Feldgerät und die Ladeschaltung leitend mit der Energieversorgung verbindet und in dem zweiten Zustand sperrt.

Wenn die von der ersten Energieversorgung zur Verfügung gestellte Ausgangsspannung geringer als die Nennspannung des Feldgerätes ist und damit das Feldgerät zusätzlich über den Energiespeicher versorgt wird, liegt an dem Feldgerät eine höhere Spannung an als an der ersten Energieversorgung, so dass die zweite Diode sperrt. Die zweite Diode ist damit mit ihrer Anode mit der ersten Energieversorgung und mit ihrer Kathode mit dem Feldgerät verbunden.

Um ein Schwingen der vorgeschlagenen Schaltung zu vermeiden, ist es sinnvoll, die Ladeschaltung bzw. den der Ladeschaltung vorgeschalteten Komparator mit einer ausreichenden Hysterese zu versehen, so dass ein permanentes Hin- und Herschalten der Ladeschaltung vermieden wird.

Die Erfindung wird nachfolgend unter Bezugnahme auf ein Ausführungsbeispiel anhand der beigefügten Figuren eingehend erläutert. Es zeigen:
- Figur 1: ein Blockschaltbild einer Energieversorgung aus dem Stand der Technik (schon behandelt),
- Figur 2: ein Blockschaltbild einer erfindungsgemäßen Energieversorgung,
- Figur 3: die Energieversorgung aus Figur 2 in dem ersten Zustand,
- Figur 4: die Energieversorgung aus Figur 2 in dem zweiten Zustand und
- Figur 5: ein Schaltbild der Ladeschaltung sowie des Energiespeichers.

Figur 2 zeigt ein Blockschaltbild einer erfindungsgemäßen Energieversorgung.

Entsprechend dem Blockschaltbild ist ein Feldgerät 7 zwischen eine erste Energieversorgung 3 und einen weiteren Block, der eine Ladeschaltung 5 sowie einen Energiespeicher 9 enthält, geschaltet. Ein Energiefluss ist grundsätzlich undirektional von der ersten Energieversorgung 3 zu dem Feldgerät 7 und bidirektional zwischen dem Feldgerät 7 und dem Block mit der Ladeschaltung 5 und dem Energiespeicher 9 möglich.

Figur 3 zeigt die Energieversorgung aus Figur 2 in einem ersten Zustand, wobei die einzelnen Komponenten der in Figur 2 gezeigten Blöcke dargestellt sind. Die einzelnen Komponenten sind zur Veranschaulichung in entsprechende Blöcke, wie in Figur 2 gezeigt, eingefasst.

Als erste Energieversorgung 3 ist eine Solarzelle vorgesehen, die bei Sonneneinstrahlung eine Ausgangsspannung zur Verfügung stellt. Zwischen die Solarzelle 3 und das Feldgerät 7 ist in Flussrichtung eine zweite Diode D₂ geschaltet, die verhindert, dass aus dem Feldgerät 7 Energie zurück in die Solarzelle 3 fließt. Durch die zweite Diode D₂ wird ein Stromfluss von dem Feldgerät 7 in Richtung der Solarzelle 3 unterbunden. Die Solarzelle 3 und das Feldgerät 7 sind über ihre Masseanschlüsse miteinander verbunden. Die Ladeschaltung 5 mit dem Energiespeicher ist im vorliegenden Ausführungsbeispiel parallel zu dem Feldgerät 7 zwischen den Masseanschluss und einen Versorgungsanschluss des Feldgerätes 7 geschaltet.

Die Ladeschaltung 5 ist im vorliegenden Ausführungsbeispiel als eine integrierte Schaltung ausgeführt und mit einem Spannungsteiler, der ebenfalls zwischen den Versorgungsanschluss und den Masseanschluss geschaltet ist, beschaltet. Durch den Spannungsteiler, der aus einem ersten Widerstand R₁ und einem zweiten Widerstand R₂ mit einem dazwischenliegenden Abgriff ausgestaltet ist, wird eine zu der an dem Feldgerät 7 anliegenden Spannung proportionale Spannung erzeugt und der Ladeschaltung 5 zugeführt.

Als Energiespeicher 9 ist im vorliegenden Ausführungsbeispiel ein Akkumulator vorgesehen. Dieser Akkumulator 9 ist mit seinem Minuspol mit dem gemeinsamen Masseanschluss und mit seinem Pluspol mit der Ladeschaltung 5 und über eine erste Diode D₁ mit dem Versorgungsanschluss des Feldgerätes 7 verbunden. Zwischen der Ladeschaltung 5 und dem Akkumulator 9 ist außerdem eine Spule L₁ angeordnet.

In Figur 3 ist die Schaltungsanordnung in einem ersten Zustand gezeigt, in dem die Solarzelle 3 ausreichend Energie für den Betrieb des Feldgerätes 7 sowie darüber hinausgehend Energie für die Ladung des Akkumulators 9 bereitstellt. Die zweite Diode D₂ befindet sich in diesem Zustand in einem leitenden Zustand und es fließt Energie von der Solarzelle 3 zu dem Feldgerät 7 sowie über die Versorgungsleitung zu der Ladeschaltung 5 und über die Ladeschaltung 5 zum Akkumulator 9. Die Diode D₁ ist dagegen in einem sperrenden Zustand, so dass ein Energiefluss von der Solarzelle 3 zu dem Akkumulator 9 ausschließlich über die Ladeschaltung 5 möglich ist. Die Diode D₁ ist in diesem Zustand nicht leitend, da auf der Seite des Feldgerätes 7 eine höhere Spannung als auf der Seite des Akkumulators 9 anliegt.

Die Ladeschaltung 5 ist in dem ersten Zustand aktiviert und lädt den Akkumulator 9.

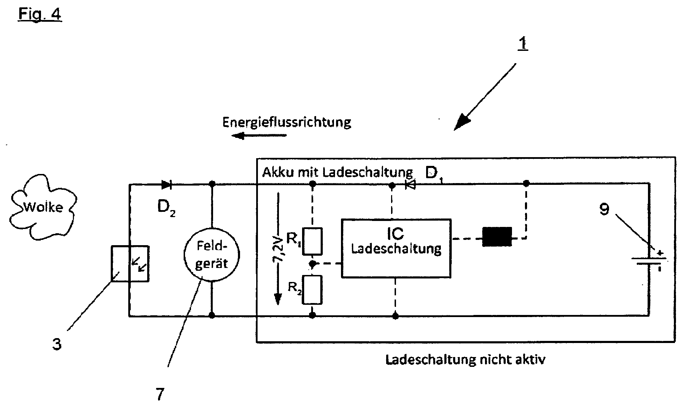

In Figur 4 ist die Energieversorgung 1 aus den Figuren 2 und 3 in einem zweiten Zustand dargestellt.

In diesem zweiten Zustand wird durch die Solarzelle 3 nicht ausreichend Energie zur Versorgung des Feldgerätes 7 zur Verfügung gestellt, so dass ein Betrieb des Feldgerätes 7 nur durch eine zusätzliche Energieversorgung aus dem Akkumulator 9 möglich ist. In diesem Zustand ist die erste Diode D₁ in einem leitenden Zustand, da auf Seiten des Akkumulators 9 eine höhere Spannung anliegt, als auf der Seite des Feldgerätes 7, so dass ein Energiefluss von dem Akkumulator 9 zu dem Feldgerät 7 ermöglicht wird. Die Ladeschaltung 5 ist in diesem Zustand deaktiviert.

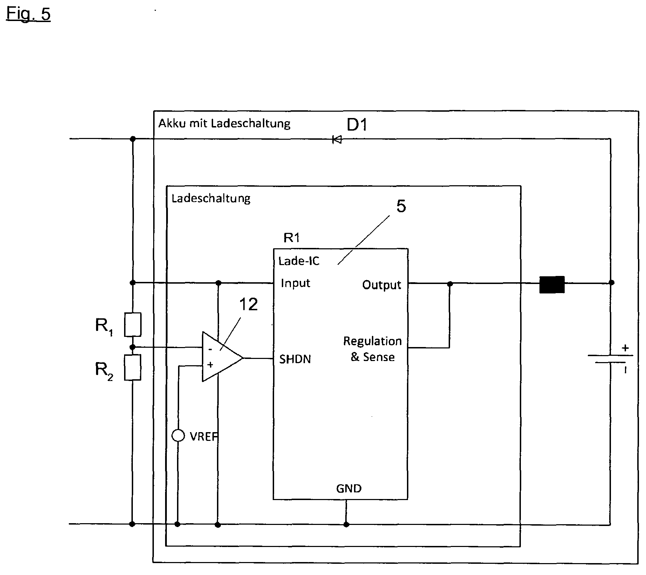

In Figur 5 ist eine vergrößerte Darstellung der Ladeschaltung gezeigt, wobei zusätzlich die Eingangsbeschaltung der Ladeschaltung 5 dargestellt ist.

Durch den durch die Widerstände R₁ und R₂ gebildeten Spannungsteiler, wird eine zur Ausgangsspannung der Solarzelle 3 proportionale Spannung erzeugt, die einem Komparator 11 an seinem invertierenden Eingang zugeführt ist. Am nichtinvertierenden Eingang des Komparators 11 liegt eine Referenzspannung an, die beispielsweise von dem Akkumulator 9 zur Verfügung gestellt sein kann.

Ein Ausgangssignal des Komparators 11 dient als Vergleichssignal, dass angibt, ob die Ausgangsspannung der Solarzelle 3 über oder unter einer Nennspannung des Feldgerätes 7 liegt.

Der Komparator 11 kann mit einer geeigneten Hysterese ausgestattet sein, so dass das Ausgangssignal des Komparators 11 bei Spannungsschwankungen um die Nennspannung des Feldgerätes 7 nicht zu springen beginnt und damit ein Schwingen der Ladeschaltung vermieden wird. Das Ausgangssignal des Komparators 11 ist mit einem Aktivierungseingang einer integrierten Ladeschaltung zugeführt, die abhängig von dem Ausgangssignal des Komparators die Ladeschaltung aktiviert oder deaktiviert.

Liegt die Ausgangsspannung der Solarzelle 3 überhalb der Nennspannung des Feldgerätes 7, so wird die Ladeschaltung 5 aktiviert und der Akkumulator 9 geladen. Liegt die Ausgangsspannung der Solarzelle 3 unterhalb der Nennspannung des Feldgerätes 7, so wird die Ladeschaltung 5 deaktiviert und das Feldgerät 7 über die Diode D₁ mit Energie aus dem Akkumulator 9 versorgt.

### Bezugszeichenliste

- 1: Energieversorgung
- 3: erste Energieversorgung
- 5: Ladeschaltung
- 7: Feldgerät
- 9: Energiespeicher / Akkumulator
- 12: Komparator

- D₁: erste Diode
- D₂: zweite Diode
- R1: erster Widerstand
- R2: zweiter Widerstand
- L1: Spule
- V_{Ref}: Referenzspannung

## Patentansprüche

1. Energieversorgung (1) für ein mit einer Nennspannung betreibbares Feldgerät (7) mit einer ersten Energieversorgung (3) und einem Energiespeicher (9), der über eine Ladeschaltung (5) von der ersten Energieversorgung (3) aufladbar ist,
**dadurch gekennzeichnet, dass**
die erste Energieversorgung (3) eine veränderliche Ausgangsspannung für das Feldgerät (7) aufweist,
die Ladeschaltung (5) zwischen der ersten Energieversorgung (3) und dem Energiespeicher (9) angeordnet ist,
die Ladeschaltung (5) in einem ersten Zustand, in dem die Ausgangsspannung über einem vorbestimmten Wert liegt, so geschaltet ist, dass das Feldgerät (7) über die erste Energieversorgung (3) betrieben und der Energiespeicher (9) geladen wird und
die Ladeschaltung (5) in einem zweiten Zustand, in dem die Ausgangsspannung unter dem vorbestimmten Wert liegt, so geschaltet ist, dass das Feldgerät (7) über die erste Energieversorgung (3) und den Energiespeicher (9) versorgt wird.

2. Energieversorgung (1) nach Anspruch 1,
**dadurch gekennzeichnet, dass**
die erste Energieversorgung (3) ein Solarmodul ist.

3. Energieversorgung (1) nach einem der vorhergehenden Ansprüche,
**dadurch gekennzeichnet, dass**
der vorbestimmte Wert die Nennspannung ist.

4. Energieversorgung (1) nach einem der vorhergehenden Ansprüche,
**dadurch gekennzeichnet, dass**
die Ladeschaltung (5) als integrierte Schaltung ausgebildet ist.

5. Energieversorgung (1) gemäß einem der vorhergehenden Ansprüche,
**dadurch gekennzeichnet, dass**
zur Umschaltung von dem ersten Zustand in den zweiten Zustand ein Komparator (11) vorgesehen ist, der eine Referenzspannung (V_{Ref}) mit einer zur Ausgangsspannung proportionalen Spannung vergleicht.

6. Energieversorgung (1) gemäß Anspruch 5,
**dadurch gekennzeichnet, dass**
ein Spannungsteiler zur Erzeugung der zur Ausgangsspannung proportionalen Spannung vorgesehen ist.

7. Energieversorgung (1) gemäß einem der vorhergehenden Ansprüche,
**dadurch gekennzeichnet, dass**
parallel zu der Ladeschaltung (5) eine Diode (D₁, ₂) vorgesehen ist, die derart angeordnet ist, dass sie in dem ersten Zustand sperrt und in dem zweiten Zustand den Energiespeicher (9) leitend mit dem Feldgerät (7) vereindet

8. Energieversorgung (1) gemäß einem der vorhergehenden Ansprüche,
**dadurch gekennzeichnet, dass**
zwischen der Energieversorgung (1) und dem Feldgerät (7) eine zweite Diode (D₂) vorgesehen ist, die derart angeordnet ist, dass sie in dem ersten Zustand das Feldgerät (7) und die Ladeschaltung (5) leitend mit der Energieversorgung (1) verbindet und in dem zweiten Zustand sperrt.

## Claims

1. Energy supply (1) for a field device (7) that can be operated with a nominal voltage, comprising a first energy supply (3) and an energy store (9) which can be charged by the first energy supply (3) via a charging circuit (5),
**characterized in that**
the first energy supply (3) has a variable output voltage for the field device (7),
the charging circuit (5) is arranged between the first energy supply (3) and the energy store (9),
the charging circuit (5), in a first state in which the output voltage is above a predetermined value, is switched so that the field device (7) is being operated via the first energy supply (3) and the energy store (9) is being charged, and
the charging circuit (5), in a second state in which the output voltage is below the predetermined value, is switched so that the field device (7) is being supplied via the first energy supply (3) and the energy store (9).

2. Energy supply (1) according to claim 1, **characterized in that** the first energy supply (3) is a solar module.

3. Energy supply (1) according to any of the preceding claims, **characterized in that** the predetermined value is the nominal voltage.

4. Energy supply (1) according to any of the preceding claims, **characterized in that** the charging circuit (5) is configured as an integrated circuit.

5. Energy supply (1) according to any of the preceding claims, **characterized in that**, in order to switch over from the first state to the second state, a comparator (11) is provided which compares a reference voltage (V_{Ref}) with a voltage proportional to the output voltage.

6. Energy supply (1) according to claim 5, **characterized in that** a voltage divider is provided for generating the voltage proportional to the output voltage.

7. Energy supply (1) according to any of the preceding claims, **characterized in that** a diode (D₁, ₂) is provided in parallel with the charging circuit (5), said diode being arranged in such a way that it exerts a blocking action in the first state and conductively connects the energy store (9) to the field device (7) in the second state.

8. Energy supply (1) according to any of the preceding claims, **characterized in that** a second diode (D₂) is provided between the energy supply (1) and the field device (7), said second diode being arranged in such a way that it conductively connects the field device (7) and the charging circuit (5) to the energy supply (1) in the first state and exerts a blocking action in the second state.

## Revendications

1. Système d'alimentation en énergie (1) destiné à un appareil de terrain (7) pouvant être actionné avec une tension nominale, comprenant une première alimentation en énergie (3) et un accumulateur d'énergie (9) pouvant être chargé à partir de la première alimentation d'énergie (3) par l'intermédiaire d'un circuit de charge (5),
**caractérisé en ce que**
la première alimentation en énergie (3) a une tension de sortie variable pour l'appareil de terrain (7),
le circuit de charge (5) est monté entre la première alimentation en énergie (3) et l'accumulateur d'énergie (9),
le circuit de charge (5) est branché dans un premier état dans lequel la tension de sortie est située au-dessus d'une valeur prédéfinie de sorte que l'appareil de terrain (7) soit actionné à partir de la première alimentation en énergie (3) et que l'accumulateur d'énergie (9) soit chargé, et
le circuit de charge (5) est branché dans un second état dans lequel la tension de sortie est située au-dessous de la valeur prédéfinie de sorte que l'appareil de terrain (7) soit alimenté à partir de la première alimentation en énergie (3) et l'accumulateur d'énergie (9).

2. Système d'alimentation en énergie (1) conforme à la revendication 1,
**caractérisé en ce que**
la première alimentation en énergie (3) est un module solaire.

3. Système d'alimentation en énergie (1) conforme à l'une des revendications précédentes,
**caractérisé en ce que**
la valeur prédéfinie est la tension nominale.

4. Système d'alimentation en énergie (1) conforme à l'une des revendications précédentes,
**caractérisé en ce que**
le circuit de charge (5) est réalisé sous la forme d'un circuit intégré.

5. Système d'alimentation en énergie (1) conforme à l'une des revendications précédentes,
**caractérisé en ce que**
pour permettre d'effectuer la commutation entre le premier état et le second état, il est prévu un comparateur (11) qui compare une tension de référence (V_{ref}) avec une tension proportionnelle à la tension de sortie.

6. Système d'alimentation en énergie (1) conforme à la revendication 5,
**caractérisé en ce qu'**
il est prévu un diviseur de tension pour obtenir la tension proportionnelle à la tension de sortie.

7. Système d'alimentation en énergie (1) conforme à l'une des revendications précédentes,
**caractérisé en ce qu'**
en parallèle sur le circuit de charge (5) il est prévu une diode (D₁, ₂) qui est montée de façon à réaliser un blocage dans le premier état et à relier de manière conductrice l'accumulateur d'énergie (9) à l'appareil de terrain (7) dans le second état.

8. Système d'alimentation en énergie (1) conforme à l'une des revendications précédentes,
**caractérisé en ce qu'**
entre le système d'alimentation en énergie (1) et l'appareil de terrain (7) il est prévu une seconde diode (D₂) qui est montée de façon à relier de façon conductrice l'appareil de terrain (7) et le circuit de charge (5) avec le système d'alimentation en énergie (1) dans le premier état et à réaliser un blocage dans le second état.
